# EUROPEAN PATENT SPECIFICATION

(11) **EP 0 774 099 B1**
(45) Date of publication and mention of the grant of the patent: **16.08.2000**
(21) Application number: 95926551.3
(22) Date of filing: 13.06.1995
(51) Int. Cl.: F23G 7/06, F01N 3/28

(54) **CATALYTIC PURIFICATION DEVICE**
VORRICHTUNG ZUR KATALYTISCHEN REINIGUNG
DISPOSITIF D'EPURATION PAR CATALYSE

(30) Priority: 04.08.1994 SE 9402630
(43) Date of publication of application: 21.05.1997
(73) Proprietor: HEED, Björn, S-412 61 Göteborg (SE)
(72) Inventor: HEED, Björn, S-412 61 Göteborg (SE)
(74) Representative: Lindberg, Klas Valter Bo
(86) International application number: SE9500706
(87) International publication number: WO9604509

(56) References cited:
- EP-A- 0 590 171
- DE-A- 4 031 042
- US-A- 4 017 347
- US-A- 4 533 584

## Description

Solvents and other organic compounds can be removed from air by oxidation or combustion. The impurities are made to react with oxygen in the air and they are thereby converted to harmless water and carbon dioxide. A high temperature is normally required for the reaction to proceed. When the impurity concentration is higher than the so-called lower explosive limit, but still under the upper explosive limit, the heat developed during the reaction is sufficient to maintain a high enough temperature, once the reaction has been initiated by ignition.

For safety reasons, however, most normal industrial processes take care to remain comfortably below this explosive limit when air containing solvents or other combustible vapors are involved. This means that emissions of ventilating air containing impurites are virtually always below the explosive limit, usually far below.

Ignition is not sufficient to produce combustion of the impurities under these circumstances. The impurity content is too low for the. reaction to proceed on its own. One way to produce combustion despite this is to heat the air to a temperature of 750-1000°C. This can be accomplished with electricity or with the help of a gas or oil burner. However, this drives up energy costs, even if heat exchangers are often used to recover heat from the treated air and to use this heat for heating the incoming, not yet treated air.

One way to reduce the reaction temperature and thus the energy consumption is to let the reaction proceed with the help of catalysts. For example, US-4 017 347 discloses a rectangular block of cellular structure, formed by a stack of bilayered tapes. When coated with a suitable catalyst the structure can act as a catalytic converter, for example, for auto exhaust emission control. For example, contact with metals from the platinum group can provide a good reaction rate even at 200 or 300°C. Catalysts consisting of various blends of metal oxides are also used. This field is quite large and new catalysts and ways of handling these catalysts to provide better catalytic activity are being developed constantly. However, temperatures well above room temperature are still normally needed for the reaction rate to be satisfactory.

The invention presented here involves a device for catalytic oxidation in which a preheating heat exchanger is an integrated part of the device. In addition to the oxidation of organic substances, the device is also suitable for other combined heat exchange and catalytic treatment of gases, for example for the so-called selective reduction of nitrogen oxides with ammonia or other reducing nitrogen compounds. The device is well suited to treating engine exhaust gases, whether they have high oxygen contents (diesel engines) or low oxygen contents (Otto engines). This is particularly true when the temperature of the exhaust or the properties of the catalyst are such that satisfactory results cannot be achieved without heating.

The key to the invention is a membrane that separates incoming air or gas mixture from outgoing air or gas mixture. The membrane is constructed such that heat can pass from the outgoing air to the incoming air, as in an ordinary recuperative heat exchanger. Preferably, air flow around the membrane is so arranged that heat exchange occures in a so-called countercurrent process, in which the coldest part of the outgoing stream heats the incoming stream just as it is coming in, while the warmer, not yet cooled part of the outgoing stream heats the incoming stream at a late stage. This produces a high degree of heat exchange and good heating efficiency.

Good heat exchange also requires that the gas have good transfer contact with the surface of the membrane. In accordance with this invention, the membrane surface is coated with a suitable catalyst, which also achieves good contact with the gas stream, which creates favorable conditions for achieving a good degree of reaction.

Thus, according to the present invention, the mebrane serves three main purposes:
1. Separating an incoming stream from an outgoing stream;
2. Transferring heat from outgoing air (gas) to outgoing;
3. Holding the catalyst, which is provided with good contact with the passing air (gas).

The membrane may well be made of a thin metal sheet or foil, such as stainless steel, which is coated with a thin layer of catalyst. The membrane may also consist of a ceramic impregnated or coated with a catalyst. Either just one side or both sides of the membrane can be coated with the catalyst.

The technique of coating surfaces with thin and economical coatings of catalysts is well developed and used, for example, in the production of conventional automobile catalysts.

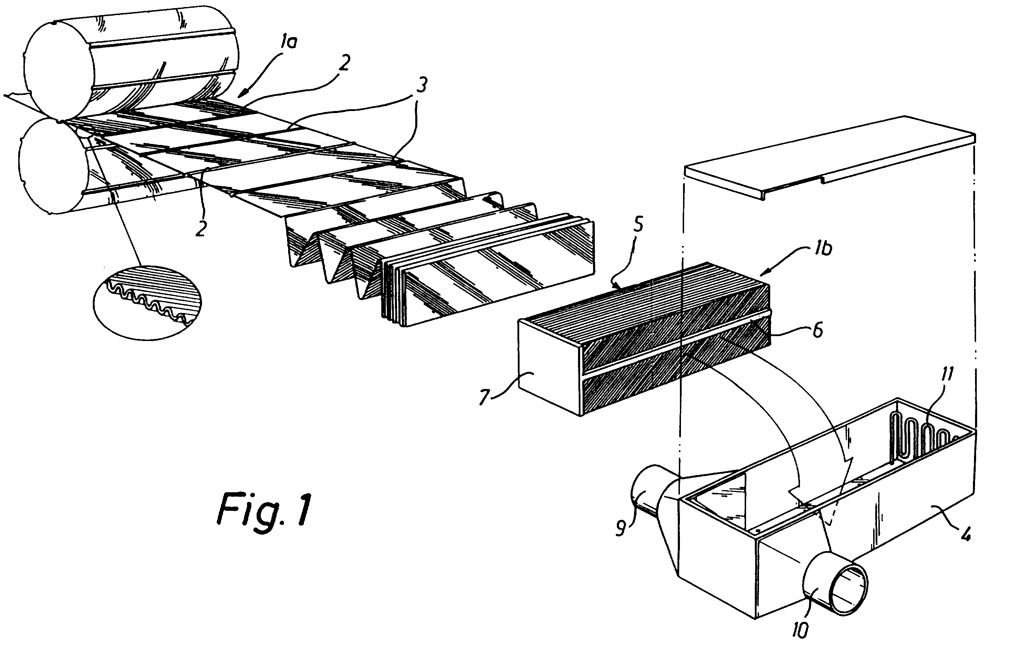

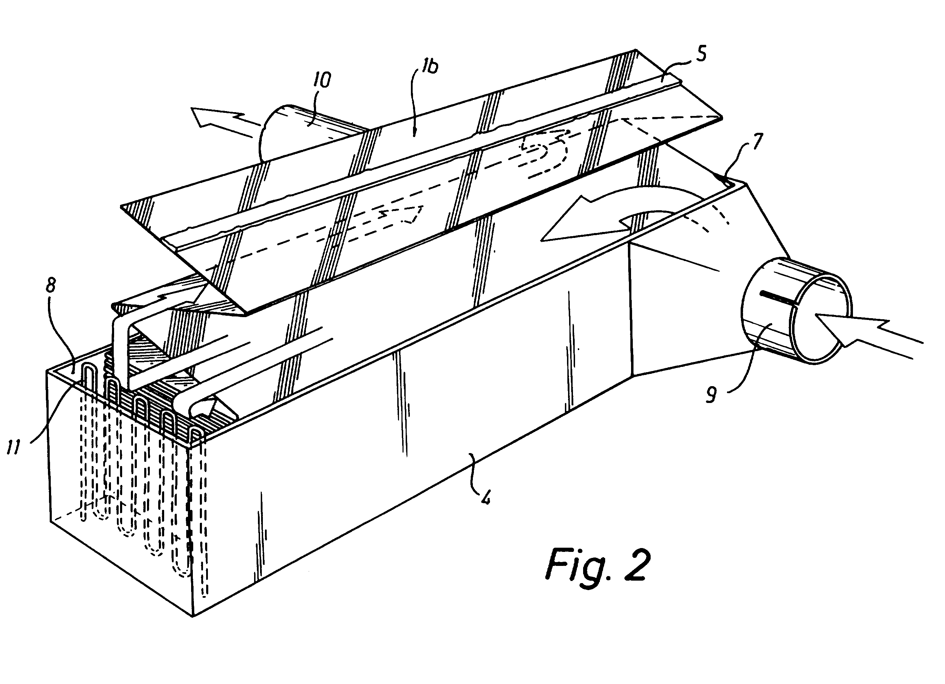

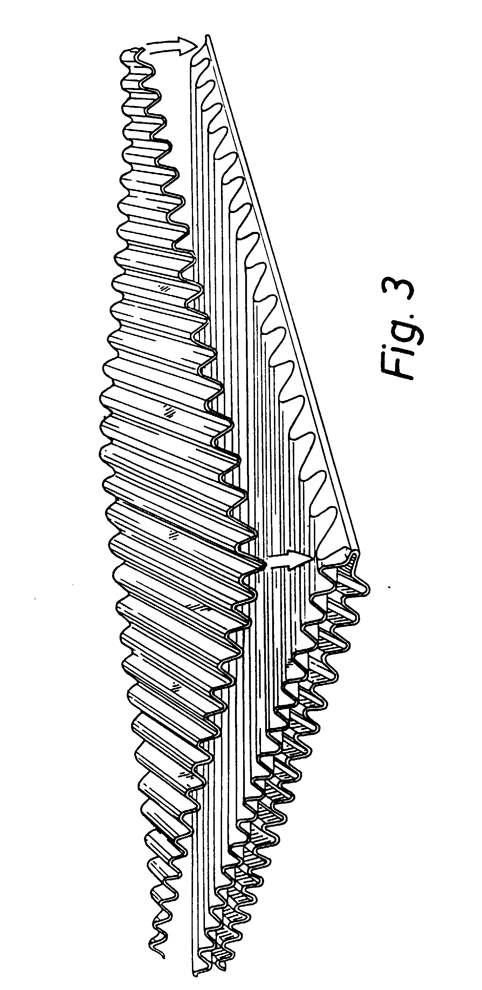

One design of the invention is shown in Figures 1 and 2. Here the membrane is made of a long metal strip 1a, which is shaped by pressing, rolling, or similar process, making it corrugated. The corrugation runs at an angle across the strip. The strip is then folded in zigzag form so that it forms a bundle 1b. In this way, the corrugations in adjacent layers lie crosswise to one another, serving as spacers and forming channels of strip that are separated from one another, where air (gas) can flow (see Figure 3). The flow patterns in these channels are such that flow in the channels mixes constantly, thus achieving good contact with the channel walls. As shown in Figure 1, to facilitate bending of the strip, the corrugation can be discontinued at regular intervals and replaced with alternately directed folding notches 2 and 3.

The strip is coated with the catalyst and enclosed in a heat-insulated outer container 4 (the insulation is not shown in the Figures). The strip bundle 1b is sealed on the two sides that are parallel to the flow 5 and 6 and at the inlet and outlet end 7. However, the other end of the bundle is not sealed, but ends in a reversing chamber 8 (Figure 2). At the inlet/outlet end 7 the outer container 4 is equipped with an attachment 9 for connecting the incoming air (gas) and another 10 for connecting the outgoing air (gas). Due to the folding of the strip, connection to all channels on one side of the bundle 1b is from the side of the bundle and is simple, so that the two attachments 9 and 10 each connect to one respective side of the strip.

A heating element 11 is also located in reversing chamber 8. In the design shown here, this element consists of electric heating colls, but other heating devices can also be used, such as gas or oil burners. As an alternative, the reversing chamber and the treated gas stream can be heated by supplying warm air or gas from an external source.

Operation of the unit is described below on the basis of Figure 2:

Before the unit is started up, the reversing chamber 8 is heated by heating unit 11 to a temperature that is just above the temperature that is needed for the reaction in question, considering the catalyst that is used. The temperature in the reversing chamber is subsequently maintained at this temperature by regulating the heat that is supplied by heating unit 11 or by the heat that is generated from the chemical reactions during operation of the unit.

Impure air is supplied through intake attachment 9 and passes in toward reversing chamber 11 through the channels on one side of bundle 1b and in this way it is heated up to the reaction temperature. At the same time that cold air (gas) flow in toward reversing chamber 11, warm air flows counter to it out toward outlet attachment 10 on the other side of the bundle. The result is that heat is transferred from the outgoing air stream to the incoming stream. Air passing through the device is heated successively to the temperature of the reversing chamber, after which the temperature is reduced successively after it has left the reversing chamber.

By good heat exchange between the outgoing and incoming air (gas), the local temperatures of these streams are caused to be close to each other. Consequently, not much additional heat is needed in reversing chamber 11. Thus, operation of the unit is extremely economical. If the chemical reaction develops sufficient heat, then no additional heating at all is required.

At the same time that the air (gas) is being heated to the correct temperature in the unit, it is also moving over the catalyst-coated surface, which is basically at the same temperature. Moreover, due to the corrugation of the strip, flow past the catalyst surface also proceeds in such a way that there is constant mixing in the cross-sectional direction of the channel, so that the air (gas) comes into good contact with the catalyst. This creates good conditions for the reaction and the device produces a high degree of purification.

When much heat is developed by the reaction in the device, for example due to a high concentration of substance undergoing oxidation, no additional heat need be supplied in reversing chamber 11. At the same time, the temperature in the reversing chamber is dependent, to a certain extent, on the concentration of the substance in the air. This is particularly true if the strip is coated with catalyst only on the outlet side, so that heating of the incoming impure air occurs without contact with the catalyst and the reaction occurs only after the flow has passed the reversing chamber.

Generation of a large quantity of heat then produces a high temperature in reversing chamber 11 and in the sections of the bundle adjacent to it. If, however, the strip bundle has a coating of catalyst on both sides or at least on the inlet side of the bundle, this temperature is lower. Here, instead, the heating occurs under constant contact with the catalytic surface and the reaction takes place when the flow achieves the proper temperature. The excess heat is constantly transferred to the outgoing air (gas) on the other side of the bundle. When everything that can react has already reacted, there is no additional temperature increase and the subsequent movement toward the reversing chamber occures with no additional temperature increase. In this way, the device is self-regulating in temperature and adjusts itself to a working temperature that is suitably just above the temperature at which the main reaction occurs. The temperature is somewhat higher at a high flow rate than at a low one.

Thus, with high and variable contents of substances to be oxidized, it can be an advantage to have the inlet side of the bundle coated with catalyst. This protects the device from high temperatures that can harm the catalyst, among other things. Coating the outlet side then creates a reserve capacity and contributes to an increased degree of purification.

If the stream that is to be purified contains some substance that requires higher treatment temperatures than the main part of the impurities, on the other hand, it can be an advantage to coat only the outlet side of the bundle with the catalyst. In that way, high temperatures can be achieved even with a readily reacting fuel. A similar effect can also be achieved using different catalysts on the two sides of the bundle, whereby the catalyst used for the heat-generating reaction is placed on the outlet side of the bundle and the catalyst that is needed for the reaction that requires heat input is placed on the inlet side of the bundle.

The main part of the chemical reaction occurs in the warm section of bundle 1b. That part 7 of the bundle that is closest to the inlet and outlet attachments is normally at a low temperature and, thus, is not catalytically active, but simply serves as a heat exchanger. Consequently, in order to save costly catalyst, it is possible to limit the catalytic coating to that part of the strip that is closest to the reversing chamber. With high contents of heat-generating impurities, however, this means that the temperature in the device can become high, just as in the case in which the coating is applied only on the outlet side of the strip.

This invention involves a device that, in a cost-efficient manner, combines a heat exchanger with a catalyst-supporting material, where the active surface is large within a limited volume and where the setup of the process can control the temperature in the desired manner. The possibility of folding a patterned strip simply and economically to produce many easily connected alternating channels with a large surface area, thereby achieving good operating efficiency, is described above. However, the angular corrugation that is described is not the only way to achieve a suitable spacing between the various layers in the bundle. Many other patterns with alternating protrusions and depressions can create the same results. A low pressure drop can be produced in the flow through the device if the corrugation or other structure is arranged in such a way that the angle against the direction of flow is small. However, this normally reduces heat transfer to the walls, which must be compensated with additional surface area. Depending on the circumstances, this larger area may actually be desirable, to make room for additional catalyst.

## Claims

1. A device for the catalytic treatment of gas mixtures, **characterized** by the fact that:
a) The catalyst is spread on a carrier surface (1a, b) that also forms the separatory wall of a recuperative heat exchanger,
b) The separatory wall consists of a formed patterned strip (1a) of metal or ceramic that is folded in a zig-zag form into a bundle (1b),
c) The bundle forms alternating channels with heat exchange between the channels, where the geometry of the channels is determined by the folding and formed pattern of the strip,
d) The alternating channels in the bundle are connected to inlet and outlet attachments (9, 10) on respective sides of the bundle transversely to the folds at one end thereof and to a reversing chamber (8) at the other end of the bundle, so that the gas flows through the device while heat exchange occures between the incoming and outgoing streams.

2. A device for the catalytic treatment of gases in accordance with claim 1, **characterized** by the fact that reversing chamber (8) contains a heating device (11).

3. A device for the catalytic treatment of gases in accordance with claim 2, **characterized** by the fact that heating device (11) consists of an electric heater.

4. A device for the catalytic treatment of gases in accordance with claim 2, **characterized** by the fact that heating device (11) consists of a burner for gas or liquid fuel.

5. A device for the catalytic treatment of gases in accordance with claim 1, **characterized** by the fact that reversing chamber (8) can be heated by a supply of warm gas.

6. A device for the catalytic treatment of gases in accordance with claims 1 through 5, **characterized** by the fact that the strip is coated with a catalyst on the inlet side of the strip and possibly on its outlet side.

7. A device for the catalytic treatment of gases in accordance with claims 1 through 5, **characterized** by the fact that the strip is coated with catalyst only on the outlet side of the strip.

8. A device for the catalytic treatment of gases in accordance with claims 1 through 5, **characterized** by the fact that the two sides of the strip are coated with different types of catalyst.

9. A device for the catalytic treatment of gases in accordance with claims 1 through 5, **characterized** by the fact that the strip is covered with catalyst only on that part of it that is closest to reversing chamber (11).

10. A device for the catalytic treatment of gases in accordance with claims 1 through 9, **characterized** by the fact that the formed pattern on the strip is broken at regular intervals by folding notches (2, 3).

## Patentansprüche

1. Vorrichtung zur katalytischen Behandlung von Gasgemischen, dadurch gekennzeichnet, daß
a) der Katalysator auf einer Trägerfläche (1a, b) verteilt ist, die auch die Trennwand eines Rekuperativ-Wärmetauschers bildet,
b) die Trennwand aus einem gebildeten, gemusterten Streifen (1a) aus Metall oder Keramik besteht, der zickzackförmig zu einem Bündel (1b) gefaltet ist,
c) das Bündel abwechselnde Kanäle mit Wärmeaustausch zwischen den Kanälen bildet, wo die Geometrie der Kanäle durch das Falten und das gebildete Muster des Streifens bestimmt wird,
d) die abwechselnden Kanäle in dem Bündel mit Einlaß- und Auslaßansätzen (9, 10) auf jeweiligen Seiten des Bündels quer zu den Falten an einem Ende davon und mit einer Umkehrkammer (8) am anderen Ende des Bündels verbunden sind, so daß das Gas durch die Vorrichtung strömt, während zwischen dem ankommenden und dem abgehenden Strom Wärmeaustausch erfolgt.

2. Vorrichtung zur katalytischen Behandlung von Gasen nach Anspruch 1, dadurch gekennzeichnet, daß die Umkehrkammer (8) eine Heizvorrichtung (11) enthält.

3. Vorrichtung zur katalytischen Behandlung von Gasen nach Anspruch 2, dadurch gekennzeichnet, daß die Heizvorrichtung (11) aus einer elektrischen Heizvorrichtung besteht.

4. Vorrichtung zur katalytischen Behandlung von Gasen nach Anspruch 2, dadurch gekennzeichnet, daß die Heizvorrichtung (11) aus einem Brenner für Gas oder flüssigen Brennstoff besteht.

5. Vorrichtung zur katalytischen Behandlung von Gasen nach Anspruch 1, dadurch gekennzeichnet, daß die Umkehrkammer (8) durch Zufuhr von warmem Gas erwärmt werden kann.

6. Vorrichtung zur katalytischen Behandlung von Gasen nach den Ansprüchen 1 bis 5, dadurch gekennzeichnet, daß der Streifen auf der Einlaßseite des Streifens und möglicherweise auf seiner Auslaßseite mit einem Katalysator beschichtet ist.

7. Vorrichtung zur katalytischen Behandlung von Gasen nach den Ansprüchen 1 bis 5, dadurch gekennzeichnet, daß der Streifen nur auf der Auslaßseite des Streifens mit Katalysator beschichtet ist.

8. Vorrichtung zur katalytischen Behandlung von Gasen nach den Ansprüchen 1 bis 5, dadurch gekennzeichnet, daß die beiden Seiten des Streifens mit anderen Arten von Katalysator beschichtet sind.

9. Vorrichtung zur katalytischen Behandlung von Gasen nach den Ansprüchen 1 bis 5, dadurch gekennzeichnet, daß der Streifen nur auf dem Teil mit Katalysator bedeckt ist, der am nächsten bei der Umkehrkammer (8) liegt.

10. Vorrichtung zur katalytischen Behandlung von Gasen nach den Ansprüchen 1 bis 9, dadurch gekennzeichnet, daß das gebildete Muster auf dem Streifen durch Faltkerben (2, 3) in regelmäßigen Abständen unterbrochen ist.

## Revendications

1. Dispositif pour le traitement catalytique de mélanges gazeux, caractérisé par le fait que:
a) le catalyseur est étalé sur une surface du support (1a, b) qui forme également la paroi de séparation d'un échangeur à récupération de chaleur,
b) la paroi de séparation est constituée par un ruban façonné à motif (1a) en métal ou en céramique qui a été plié en zigzag pour former un faisceau (1b),
c) le faisceau forme des canaux alternants avec échange thermique entre les canaux, la géométrie des canaux étant déterminée par le pliage et par le motif façonné du ruban,
d) les canaux alternant dans le faisceau sont connectés à des raccords d'entrée et de sortie (9, 10) sur les côtés respectifs du faisceau en position transversale par rapport au pli à une de ses extrémités et à une chambre à mouvement alternatif (8) à l'autre extrémité du faisceau, si bien que les gaz s'écoulent à travers le dispositif tandis qu'un échange thermique a lieu entre les courants entrants et sortants.

2. Dispositif pour le traitement catalytique de gaz selon la revendication 1, caractérisé par le fait que la chambre à mouvement alternatif (8) contient un dispositif de chauffage (11).

3. Dispositif pour le traitement catalytique de gaz selon la revendication 2, caractérisé par le fait que le dispositif de chauffage (11) est constitué d'un dispositif de chauffage électrique.

4. Dispositif pour le traitement catalytique de gaz selon la revendication 2, caractérisé par le fait que le dispositif de chauffage (11) est constitué d'un brûleur pour un combustible gazeux ou liquide.

5. Dispositif pour le traitement catalytique de gaz selon la revendication 1, caractérisé par le fait que la chambre à mouvement alternatif (8) peut être chauffée par alimentation d'un gaz chaud.

6. Dispositif pour le traitement catalytique de gaz selon les revendications 1 à 5, caractérisé par le fait que le ruban est enduit d'un catalyseur sur le côté entrée du ruban et le cas échéant sur son côté sortie.

7. Dispositif pour le traitement catalytique de gaz selon les revendications 1 à 5, caractérisé par le fait que le ruban est enduit du catalyseur uniquement sur le côté sortie du ruban.

8. Dispositif pour le traitement catalytique de gaz selon les revendications 1 à 5, caractérisé par le fait que les deux côtés du ruban sont enduits avec des types de catalyseurs différents.

9. Dispositif pour le traitement catalytique de gaz selon les revendications 1 à 5, caractérisé par le fait que le ruban est recouvert d'un catalyseur uniquement sur sa partie la plus proche de la chambre à mouvement alternatif (11).

10. Dispositif pour le traitement catalytique de gaz selon les revendications 1 à 9, caractérisé par le fait que le motif formé sur le ruban est interrompu à intervalles réguliers par des encoches de pliage (2, 3).
